# EUROPÄISCHE PATENTSCHRIFT

(11) **EP 1 235 090 B1**
(45) Veröffentlichungstag und Bekanntmachung des Hinweises auf die Patenterteilung: **13.08.2003**
(21) Anmeldenummer: 01104277.7
(22) Anmeldetag: 22.02.2001
(51) Int. Cl.: G02B 7/18, G02B 7/182, B23K 26/02, B23K 26/04

(54) **Vorrichtung zur Strahlführung eines Laserstrahls**
Laser beam guidance device
Dispositif de guidage d'un faisceau laser

(43) Veröffentlichungstag der Anmeldung: 28.08.2002
(73) Patentinhaber: TRUMPF LASERTECHNIK GmbH, D-71254 Ditzingen (DE)
(72) Erfinder: Borstel, Michael von, Dr., 74385 Pleidelsheim (DE); Häcker Michael, 71299 Winsheim (DE)
(74) Vertreter: Maser, Jochen, Dipl.-Ing.

(56) Entgegenhaltungen:
- EP-A- 0 974 858
- WO-A-80/01419
- DE-A- 3 330 626
- DE-A- 4 007 622
- DE-U- 9 416 673
- US-A- 3 836 236
- US-A- 4 606 620
- US-A- 4 623 229
- US-A- 4 679 204
- PATENT ABSTRACTS OF JAPAN vol. 015, no. 489 (M-1189), 11. Dezember 1991 (1991-12-11) -& JP 03 210988 A (MITSUBISHI ELECTRIC CORP), 13. September 1991 (1991-09-13)

## Beschreibung

Die Erfindung betrifft eine Vorrichtung zur Strahlführung eines Laserstrahls mit zumindest einem optischen Element gemäß dem Oberbegriff des Anspruchs 1.

Die Lasertechnologie wird in den verschiedensten Fachgebieten eingesetzt. Beispielsweise werden für die flexible Materialbearbeitung Hochleistungslaser eingesetzt. Diese Leistungslaser weisen einen Resonator auf, in welchem das Laserlicht entsteht. In diesem Resonator ist ein Rückspiegel vorgesehen als auch ein Auskoppelspiegel, der teildurchlässig ist, so daß ein bestimmter Anteil des Laserlichtes den Resonator verlassen kann, um damit beispielsweise die Materialbearbeitung durchzuführen. Zur Erhöhung der Leistung bei Leistungslasern ist erforderlich, daß die Entladungsstrecke im Resonator länger wird. Um dieser Anforderung bei einem hinreichend kleinen Bauraum gerecht zu werden, sind CO₂-Leistungslaser entwickelt worden, deren Resonator gefaltet ist, damit der Lichtweg trotz kompakter Bauweise lang wird. In jedem Streckenabschnitt des gefalteten CO₂-Leistungslasers wird eine separate Gasentladung erzeugt. Am Ende der Entladungsstrecke sind Umlenkspiegel vorgesehen, um die Strahlführung in dem gefalteten Resonator zu ermöglichen.

Die zur Strahlführung eingesetzten optischen Elemente sind in Abhängigkeit der Funktion in ihrem Transmissions- und Reflexionsgrad unterschiedlich ausgebildet und angepaßt. Es kommen optische Elemente zum Einsatz, die eine Totalreflexion ermöglichen als auch optische Elemente, die eine Teiltransmission mit unterschiedlichem Durchlässigkeitsgrad ermöglichen.

Bei der Umlenkung eines Laserstrahles in einem Leistungslaser wird ein optisches Element eingesetzt, welches durch Totalreflexion den Strahl weiterleitet. Hierfür ist eine Vorrichtung vorgesehen, welche einen ersten Gehäuseabschnitt mit einer Gehäuseöffnung aufweist, der zumindest teilweise in einem Tragkörper des Leistungslasers vorgesehen ist. Diese Öffnung des ersten Gehäuseabschnitts ist im Umlenkbereich des Laserstrahles des gefalteten Leistungslasers vorgesehen. An diesem ersten Gehäuseabschnitt ist durch eine Schraubverbindung ein zweiter Gehäuseabschnitt fixiert, der wiederum über eine Schraubverbindung an dem Tragkörper montiert ist. Dieser zweite Gehäuseabschnitt nimmt eine das optische Element zumindest teilweise umgebende Aufnahme auf. Durch eine weitere Schraubverbindung ist diese Aufnahme zum zweiten Gehäuseabschnitt montiert, so daß das optische Element zur Öffnung im ersten Gehäuseabschnitt positioniert ist und diese Öffnung schließt.

Der erste Gehäuseabschnitt ist aus Edelstahl ausgebildet, um eine harte und ebene Anlagefläche zumindest im Randbereich der Gehäuseöffnung für das optische Element zu bilden. Der zweite Gehäuseabschnitt ist aus einer Aluminiumlegierung ausgebildet, welche in der Herstellung kostengünstig ist und eine gute Ableitung der Wärme ermöglicht, die während der Umlenkung des Strahles in dem optischen Element absorbiert wird. Zur besseren Kühlung ist die Aufnahme des optischen Elementes zweiteilig ausgebildet und weist in einem der Gehäuseöffnung des ersten Gehäuseabschnittes gegenüberliegenden Bereich eine in die Aufnahme eingesetzte Kühleinheit mit einem Zuführ- und Abführkanal für die Kühlflüssigkeit auf. Durch die Heranführung der Kühlflüssigkeit nahe der Rückseite des optischen Elementes wird in diesem Bereich eine verbesserte Kühlung erzielt als im zweiten Gehäuseabschnitt und in dem schlechter wärmeleitenden ersten Gehäuseabschnitt.

Beim Betrieb eines Leistungslasers kommt es aufgrund der Erwärmung des optischen Elements und der Erwärmung des zweiteiligen, aus unterschiedlichen Materialien bestehenden Gehäuses zu unterschiedlichen Wärmeausdehnungen. Insbesondere im Bereich der Verschraubung des ersten und zweiten Gehäuseabschnitts treten erhöhte Verspannungen auf, die zur Unebenheit der Anlagefläche des optischen Elements führen und die Umlenkung des Laserstrahls beeinflussen. Ein Wandern des Modes bei einer Erwärmung der verspannten Auflagefläche ist die Folge. Dadurch treten Abweichungen von der Intensitätsverteilung des Modes auf, wodurch die erzielbare Leistung und Strahlqualität verringert werden. Gleichzeitig folgt aus der Unebenheit der Anlagefläche eine Verkippung des optischen Elements, welche ebenso einen Einfluß auf das Wandern des Modes hat.

Ein Vorrichtung zur Strahlfürung eines Laserstrahles mit einem optischen Element und mit einem einteiligen Gehaüse ist in Dokument US 3836236 beschreiben.

Aufgrund eines einteiligen Gehäuses, wie in Dokument US 3836236, kann erzielt werden, daß auf die Anlagefläche wirkende Verspannungen durch unterschiedliche Ausdehnungskoeffizienten einer Materialpaarung nicht gegeben sind. Ebenso treten die durch die Schraubverbindung erzeugten Verspannungen zwischen dem getrennten ersten und zweiten Gehäuseabschnitt aufgrund der Einteiligkeit nicht auf, so daß ein weiterer Störfaktor auf die Ebenheit der Anlagefläche eliminiert ist. Auch kann ein Aufsummieren von Toleranzen bei dem Zusammenbau eines ersten und zweiten Gehäuseabschnittes nicht mehr auftreten.

Der Erfindung liegt deshalb die Aufgabe zugrunde, eine Vorrichtung zur Strahlführung eines Laserstrahles mit einem optischen Element zu schaffen, die eine ebene und harte Anlagefläche zur vollständigen Anlage des optischen Elements und eine gute Wärmeableitung ermöglicht.

Diese Aufgabe wird durch die Merkmale des Anspruchs 1 gelöst.

Durch die Kombination des einteiligen Gehäuses mit einer gegenüber dem Gehäusematerial harten Oberfläche einer Anlagefläche für das optische Element wird eine Ebenheit erzielt, die gegenüber dem Stand der Technik zumindest um den zweifachen Faktor erhöht ist. Das dadurch erzielte hohe Maß der Ebenheit weist den Vorteil auf, daß eine verbesserte Wärmeleitung durch einen größer werdenden flächigen Kontakt zwischen dem Gehäuse und dem optischen Element gegeben ist, um die in dem optischen Element absorbierte Wärme abzuführen. Je geringer die Erwärmung des optischen Elements als auch des Gehäuses ist, desto geringer sind die thermischen Einflüsse, welche ein Wandern des Modes bewirken.

Durch die gegenüber dem Gehäusematerial härtere Oberfläche der Beschichtung kann eine Beschädigung der Anlagefläche während der Montage des optischen Elementes verhindert sein, welche zu Aufwerfungen auf der Anlagefläche führt und eine Verkippung des optischen Elementes nach sich ziehen würde. Dadurch wird eine präzise Strahlführung erzielt.

Darüber hinaus weist die Ausgestaltung des einteiligen Gehäuses und der auf der Anlagefläche vorgesehenen Beschichtung den Vorteil auf, daß eine gute Wärmeableitung in dem gesamten Gehäuse gegeben ist, insbesondere aus dem Bereich der stärksten Erwärmung, dem optischen Element, in das einteilige Gehäuse, welches sich bis unmittelbar zur Gehäuseöffnung erstreckt. Gleichzeitig weist das einteilige Gehäuse den Vorteil auf, daß während dem Betrieb eine gleichmäßige Erwärmung des Gehäuses und der Aufnahme des optischen Elementes gegeben ist, welche zu einer gleichmäßigen Ausdehnung führt. Die Ebenheit der Anlagefläche wird somit auch während dem Betrieb beibehalten.

Erste Versuche haben ergeben, daß durch die erfindungsgemäße Ausgestaltung eine Reduzierung der Erwärmung des optischen Elementes um mehr als 20° C erzielt wird.

Des weiteren kann durch die einteilige Ausgestaltung des Gehäuses eine Einsparung der Materialkosten als auch der Montagekosten erzielt werden.

Die Vorrichtung weist vorteilhafterweise ein Gehäuse aus einem gut wärmeleitfähigen Material, beispielsweise eine Leichtmetallegierung, insbesondere eine Aluminiumlegierung, auf. Dadurch kann ein schneller Wärmeabtransport von dem Strahlengang und dem optischen Element nach außen erfolgen, um die Aufwärmung gering zu halten. Aluminiumlegierungen weisen darüber hinaus den Vorteil auf, daß diese einfach und präzise zu bearbeiten sind.

Nach einer weiteren vorteilhaften Ausgestaltung der Erfindung ist vorgesehen, daß die Beschichtung der Anlagefläche aus Übergangsmetallen, wie beispielsweise Nickel, Molybdän, Chrom, seltene Erden oder dergleichen vorgesehen ist. Diese Beschichtung wird vorzugsweise durch ein chemisches Verfahren, Aufdampfverfahren, durch Anwachsen von Schichten oder dergleichen aufgebracht. Neben den genannten Werkstoffen können auch weitere Schichten vorgesehen sein, die eine harte Oberfläche und ein hohes Maß an Ebenheit aufweisen. Alternativ kann auch vorgesehen sein, daß ein die Gehäuseöffnung umgebender Bereich durch ein Härteverfahren behandelt wird, so daß die Anlagefläche für das optische Element eine harte Oberfläche mit einem hohen Maß an Ebenheit aufweist. Bei Beschichtungsverfahren, die die erforderliche Ebenheit nicht direkt einreichen, wird die Beschichtung nachbearbeitet.

Vorteilhafterweise ist vorgesehen, daß die Beschichtung eine Schichtdicke von wenigstens 20 µm aufweist. Dadurch kann sichergestellt sein, daß eine vollständige Bearbeitung der gesamten Beschichtung nach deren Aufbringen möglich ist und eine hinreichende Schichtstärke verbleibt. Der bevorzugte Beschichtungswerkstoff Nickel weist zwar eine geringe Wärmeleitfähigkeit auf. Da der Wärmestrom durch die Fläche proportional von Temperaturdifferenz und Wärmeleitfähigkeit sowie umgekehrt proportional von der Schichtdicke abhängt, wird die geringe Wärmeleitfähigkeit von der äußerst dünnen Schichtdicke kompensiert. Insgesamt resultiert in der Beschichtung bei einem festen Wärmestrom, der abgeführt werden muß, eine sehr kleine Temperaturdifferenz.

Nach einer weiteren vorteilhaften Ausgestaltung ist vorgesehen, daß die beschichtete Anlagefläche durch Drehen oder Fräsen mit Diamant, Polykristallindiamant (PKD), Keramiken als auch Schleifen, Präzisionsdrehen oder Läppen bearbeitet ist. Dadurch kann eine Ebenheit der Anlagefläche erzielt werden, welche kleiner als 1 um, vorzugsweise kleiner als 0,5 µm, ausgebildet ist. Durch die hochpräzise ebene Anlagefläche ist ein guter Wärmeübergang vom optischen Element in das Gehäuse gegeben. Des weiteren kann das optische Element in der Vorrichtung nahezu verkippungsfrei angeordnet sein.

Nach einer weiteren vorteilhaften Ausgestaltung der Erfindung ist vorgesehen, daß das Gehäuse wenigstens einen Kühlkanal aufweist, der auf der Höhe des optischen Elementes vorgesehen ist und diesen wenigstens teilweise umgibt. Durch die einteilige Ausgestaltung des Gehäuses ist ermöglicht, die Kühlung unmittelbar in der Nähe des optischen Elementes vorzusehen, um die Wärmeableitung zu erhöhen. Vorteilhafterweise ist ein Kühlkanal vorgesehen, der symmetrisch zum optischen Element angeordnet ist und das optische Element vollständig umgibt. Im Idealfall ist der Kühlkanal so ausgebildet, daß die Form des Kühlkanals der Form des optischen Elements entspricht, das heißt, beispielsweise bei einem kreisförmigen optischen Element ist der Kühlkanal kreisringförmig ausgebildet. Da ein kreisringförmiger Kühlkanal fertigungstechnisch sehr aufwendig herzustellen ist, wird der Kreisring zum Beispiel durch ein gleichseitiges Parallelogramm angenähert. Ein Zuführ- und Abführkanal mündet, vorzugsweise im Winkel von 180° zueinander versetzt, in den Kühlkanal.

Nach einer weiteren vorteilhaften Ausgestaltung der Erfindung ist vorgesehen, daß die optischen Elemente als Silizium- oder Kupferspiegel oder aus Zinkselenid, Galliumarsenid oder Diamant ausgebildet sind, welche in Abhängigkeit der Durchlässigkeit und des Reflexionsgrades als Umlenkspiegel, Teiltransmissionsspiegel, Auskoppelelement oder Rückspiegel einsetzbar sind.

Aufgrund der geringeren Erwärmung des optischen Elementes durch die erfindungsgemäße Vorrichtung zur Aufnahme des optischen Elementes kann beispielsweise ein Siliziumspiegel, der bislang nur bei einem Leistungslaser mit einer maximalen Leistung von 3 kW eingesetzt wurde, nunmehr auch bei beispielsweise einem 4 kW-Leistungslaser eingesetzt werden. Diese Siliziumspiegel sind in der Herstellung kostengünstiger als sonstige optische Elemente, die bei einer erhöhten Leistung der Laser eingesetzt werden und sind deshalb bevorzugt.

In der nachfolgenden Beschreibung und den Zeichnungen werden bevorzugte Ausführungsbeispiele der Erfindung näher beschrieben. Es zeigen:
- Figur 1: einen schematischen Vollquerschnitt einer erfindungsgemäßen Vorrichtung,
- Figur 2: eine schematische Draufsicht auf die erfindungsgemäße Vorrichtung gemäß Figur 1,
- Figur 3: eine vergrößerte Detaildarstellung einer Anlagefläche für das optische Element,
- Figur 4: eine schematische Ansicht des Gehäuses der erfindungsgemäßen Vorrichtung mit Kühlkanälen und
- Figur 5: ein schematischer Vollquerschnitt einer alternativen Ausführungsform zu Figur 1.

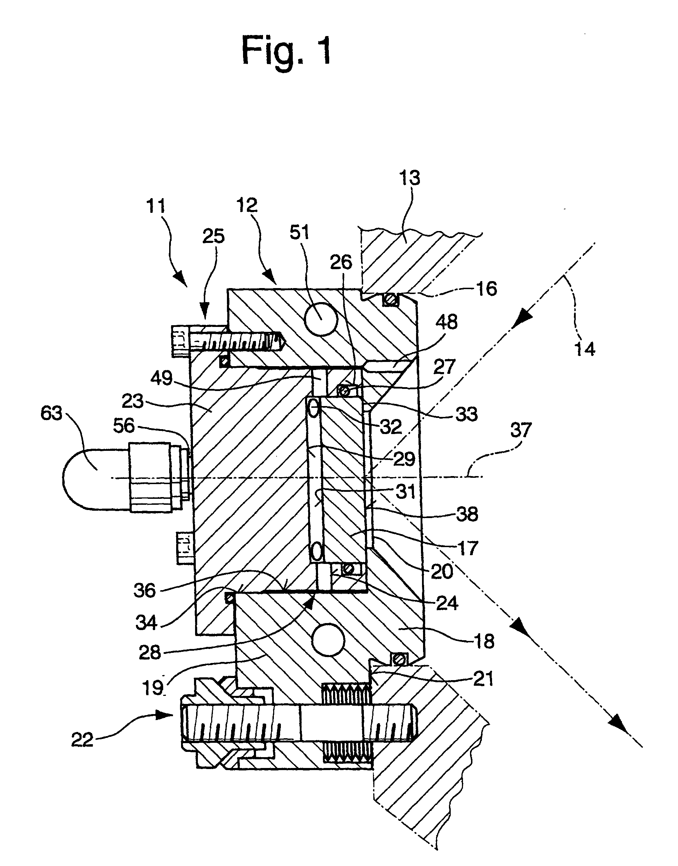

In Figur 1 ist eine Vorrichtung 11 zur Strahlführung von zumindest einem Laserstrahl 14 im Vollquerschnitt dargestellt. Diese Vorrichtung 11 ist ein Bauteil eines Leistungslasers. Als Leistungslaser kommt beispielsweise ein Gaslaser, insbesondere ein CO₂-Laser, zum Einsatz. Das im nachfolgenden näher beschriebene Ausführungsbeispiel dient zur Umlenkung eines Laserstrahles 14. In Abhängigkeit des Transmissionsgrades des optischen Elementes 17 und der Ausbildung einer Aufnahme 23 für das optische Element 17 kann diese Vorrichtung 11 bei Leistungslasem zur Auskopplung und zur Reflexion der Strahlung als auch zur Überprüfung der Leistung eines Laserstrahls mit einem teiltransmittierenden optischen Element eingesetzt werden. Nachfolgend wird ein bevorzugtes Ausführungsbeispiel beispielhaft in der Funktion als Umlenkspiegel näher erörtert.

Die Vorrichtung 11 weist ein Gehäuse 12 auf, welches an einem Tragkörper 13 eines Leistungslasers in Eck- oder Endbereichen zur Umlenkung eines Laserstrahles 14 fixiert ist. Das Gehäuse 12 weist einen ersten Gehäuseabschnitt 18 auf, welcher vakuumdicht in eine Bohrung 16 des Tragkörpers 13 im Eckbereich eingesetzt ist. An diesem ersten Gehäuseabschnitt 18 schließt sich ein weiterer Gehäuseabschnitt 19 an, der gegenüber dem ersten Gehäuseabschnitt 18 eine vergrößerte Anflanschfläche 21 aufweist, um die Vorrichtung 11 am Tragkörper 13 über eine Schraubverbindung 22 zu fixieren.

Der weitere Gehäuseabschnitt 19 ist mit dem ersten Gehäuseabschnitt 18 einteilig ausgebildet. In den weiteren Gehäuseabschnitt 19 ist eine Aufnahme 23 eingesetzt, welche ein optisches Element 17 aufnimmt und dieses wenigstens teilweise umgibt. Hierfür ist eine Bohrung 24 in der Aufnahme 23 vorgesehen, in welcher das optische Element 17 radial geführt ist. Im Randbereich der Bohrung 24 ist eine Nut 26 vorgesehen, um eine Dichtung 27 darin zu positionieren. Diese Dichtung 27 hat im wesentlichen eine Haltefunktion für das optische Element 17, so daß ein gefahrloses Einsetzen der Aufnahme 23 beziehungsweise des optischen Elementes 17 in eine Bohrung 28 des Gehäuseabschnitts 19 ermöglicht ist. Zwischen einem Boden 29 der Bohrung 24 und einer Rückseite 31 des optischen Elementes 17 ist ein Federelement 32 vorgesehen, welches das optische Element 17 nachgiebig gegen eine an eine Gehäuseöffnung 20 des ersten Gehäuseabschnittes 18 angrenzende Anlagefläche 33 fixiert.

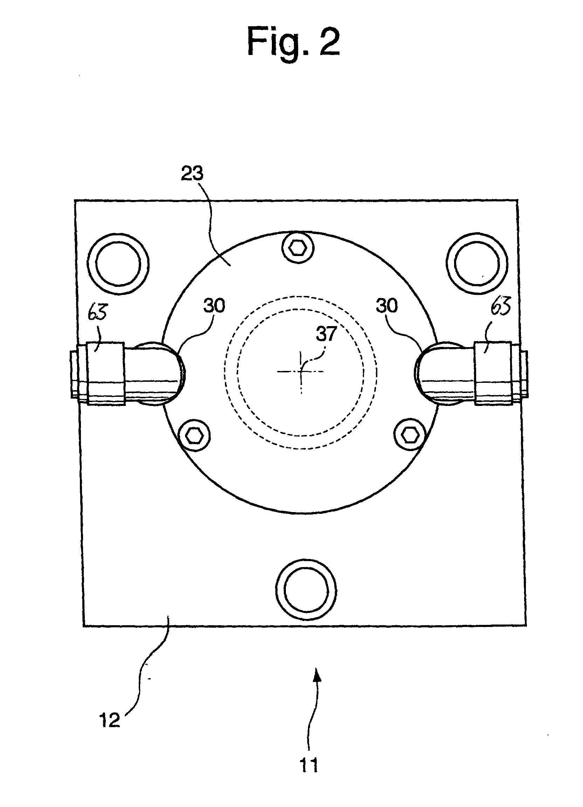

Die Aufnahme 23 ist vorteilhafterweise über eine Schraubverbindung, wie in Figur 2 dargestellt ist, zum Gehäuse 12 fixiert. Die radiale Führung der Aufnahme 23 in der Bohrung 28 erfolgt durch eine Umfangsfläche 34, welche im Durchmesser geringfügig größer gegenüber der weiteren, sich in die Bohrung 28 erstreckende Umfangsfläche 36 ausgebildet ist. An einem die Aufnahme 23 umgebenden Ringbund 25 sind Einbuchtungen 30 (Fig. 2) vorgesehen, die um 180° versetzt zueinander vorgesehen sind. Diese Einbuchtungen 30 wirken mit nachfolgend noch näher beschriebenen Zufuhr- und Abfuhrelementen einer Kühlung zusammen und bilden eine Verdrehsicherung der Aufnahme 23 um die geometrische Achse 37, so daß das optische Element 17 ohne einen Anteil an Rotationsbewegung um die Achse 37 an der Anlagefläche 33 zur Anlage kommt. Das optische Element 17 ist über das Gehäuse 12 und die Aufnahme 23 zur geometrischen Achse 37 zentrisch ausgerichtet. Die Oberfläche beziehungsweise Umlenkfläche 38 des optischen Elementes 17 ist vorteilhafterweise derart positioniert, daß die Strahlführung bzw. -umlenkung in der geometrischen Achse 37 liegt.

Das Gehäuse 12 ist aus einem gut wärmeleitfähigen Material ausgebildet. Vorteilhafterweise wird eine Aluminiumlegierung eingesetzt. Ebenso ist die Aufnahme 23 aus einem gut wärmeleitfähigen Material ausgebildet, wobei vorteilhafterweise dasselbe Material wie für das Gehäuse 12 vorgesehen ist.

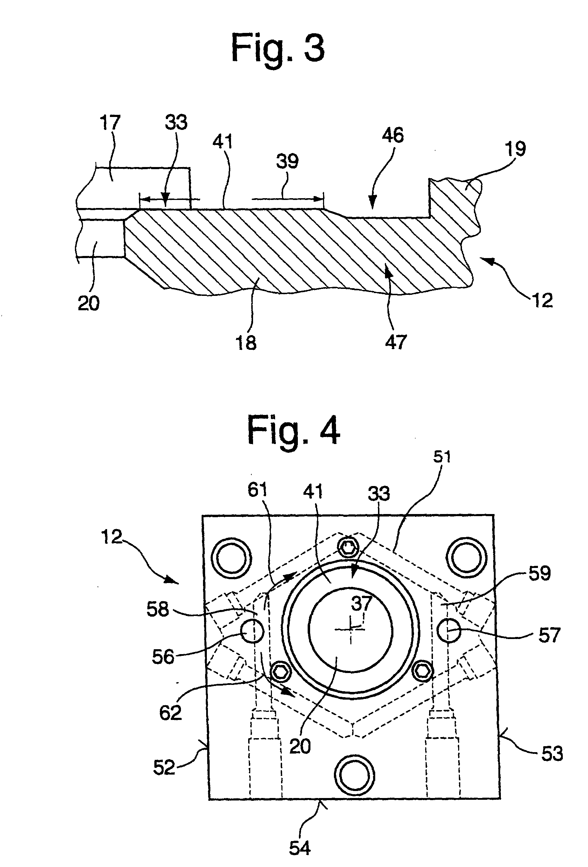

Die Anlagefläche 33 des ersten Gehäuseabschnitts 18, welche in Figur 3 näher dargestellt ist, weist eine Ringfläche 39 mit einer Beschichtung 41 auf. Diese Beschichtung 41 wird durch chemisches Vernickeln oder CVD hergestellt. Weitere Verfahren und Materialien sind ebenfalls möglich. Bei Beschichtungsverfahren, die die erforderliche Einheit nicht direkt erzielen, wird die Beschichtung nachbearbeitet. Eine Schichtdicke von beispielsweise 100 um wird aufgetragen, bevor die Beschichtung 41 durch Feinstbearbeitung auf das Endmaß gebracht wird. Bei der Feinstbearbeitung kann Drehen oder Fräsen mit Diamant, Polykristallindiamant (PKD), Keramiken als auch Schleifen, Präzisionsdrehen und Läppen zum Einsatz kommen. Die Schichtdicke der Beschichtung 41 ist derart bemessen, daß nach dem Bearbeiten eine Mindestschichtdicke von wenigstes 20 um vorgesehen ist, so daß nach der Bearbeitung eine vollständig flächendeckende Beschichtung 41 für die Ringfläche 39 gegeben ist. Für die Beschichtung 41 ist erforderlich, daß diese als Schutz vor Kratzern und Beschädigungen eine harte Oberfläche aufweist, die außerdem sehr eben ist, um eine gute Wärmeleitung und eine stabile Auflage für das optische Element zu erzielen. Die Ringfläche 39 ist gleich oder größer als die benötigte Anlagefläche 33 für das optische Element 17 ausgebildet. Vorteilhafterweise wird der maximale Durchmesser der Ringfläche 39 auf das größte, zum Einsatz für die Gehäusegröße kommende optische Element 17 ausgelegt. Die Ringfläche 39 des ersten Gehäuseabschnitts 18 ist gegenüber einer weiteren Ringfläche 46 einer Schulter 47 erhaben. In diese Ringfläche 46 mündet eine Bohrung 48 (Figur 1), welche eine Verbindung zum Vakuum im Resonatorraum bildet. Diese Bohrung 48 steht auch über einen durch die Umfangsfläche 36 mit der Bohrung 28 gebildeten Spalt und einer weiteren Bohrung 49 mit dem rückseitigen Raum des optischen Elementes 17 in Verbindung.

Das Gehäuse 12 weist gemäß Figur 4 eine Kühlung auf, welche durch einen Kühlkanal 51 ausgebildet ist, der das optische Element 17 als Ringkanal umgibt. Der Kühlkanal 51 ist möglichst nahe an der Anlagefläche 33 vorgesehen, wie aus der Schnittdarstellung in Figur 1 hervorgeht. Aus der Draufsicht in Figur 4 ist zu entnehmen, daß beispielsweise V-förmig angeordnete Bohrungen von einer linken und rechten Seitenfläche 52, 53 eingebracht werden, um das optische Element 17 zu umgeben. Durch weitere Bohrungen, die von einer Stirnseite 54 eingebracht werden, wird ein Ringkanal gebildet. Die zu den Seitenwänden 52, 53 und 54 weisenden Öffnungen der Bohrungen werden durch Verschlußstopfen mediumdicht geschlossen.

Ein Zuführ- und Abführkanal 56, 57 ist rechtwinklig zu einem Kühlkanalabschnitt 58, 59 des Ringkanals vorgesehen. Die Zuführung und Abführung sind getrennt zueinander angeordnet, so daß die Kühlflüssigkeit das optische Element 17 gemäß Pfeilrichtung 61 und 62 gleichzeitig umströmt, um eine gleichmäßige Kühlung zu ermöglichen.

An den Zu- und Abführkanälen 56, 57 sind Winkelverbinder 63 vorgesehen, wie in Figur 1 und 2 dargestellt ist. Diese Anordnung weist des weiteren den Vorteil auf, daß eine einfache Montage des Gehäuses 12 zum Tragkörper 13 gegeben ist.

Darüber hinaus kann die Aufnahme 23 frei von der Zuführung und Abführung der Kühlung zur Montage und Demontage des optischen Elementes 17 aus dem Gehäuse 12 entfernt und in dieses eingesetzt werden.

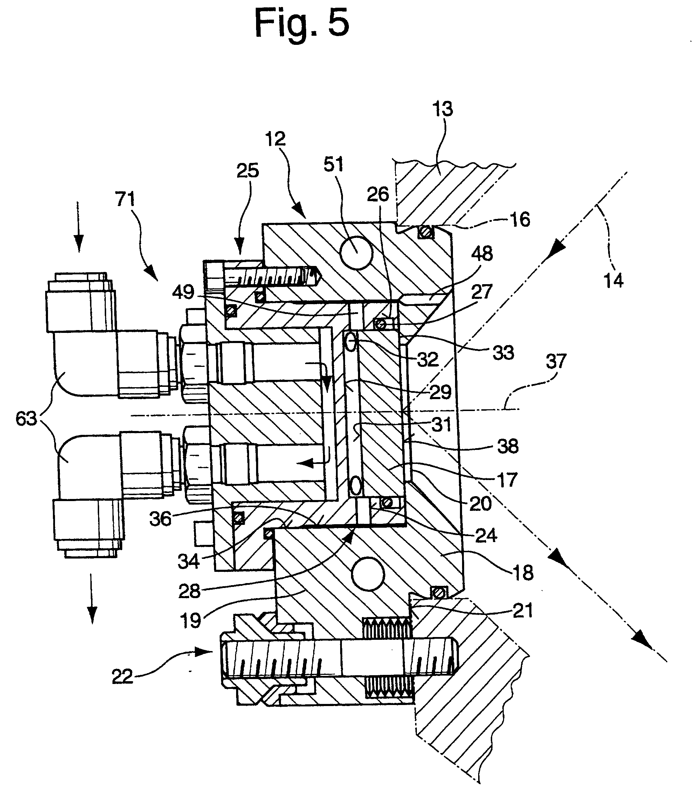

In Figur 5 ist eine alternative Ausführungsform zu Figur 1 dargestellt. Bei einem erhöhten Bedarf an Wärmeableitung kann die Aufnahme 23 einen weiteren Kühleinsatz 71 aufnehmen, um das optische Element 17 zu kühlen. Dieser Kühleinsatz 71 ist derart ausgebildet, daß der Boden 29 der Aufnahme 23 mit Kühlflüssigkeit umströmt wird, so daß über das Federelement 32 und den Boden 29 eine gute Wärmeableitung gegeben ist. Diese Anordnung und Ausgestaltung des Kühleinsatzes 71 kann als zusätzliche Maßnahme wahlweise für die erhöhte Anforderung an Kühlung erfolgen. Die Anwendung des Kühleinsatzes 71 steht auch in Abhängigkeit des verwendeten Materials für das optische Element 17 und/oder das Gehäuse 12 sowie der Leistung des Hochleistungslasers.

## Patentansprüche

1. Vorrichtung zur Strahlführung eines Laserstrahles (14) mit zumindest einem optischen Element (17) und mit einem Gehäuse (12), welches einen in einen Tragkörper (13) eines Leistungslasers oder Strahlführungssystems zumindest teilweise einsetzbaren oder daran anbringbaren ersten Gehäuseabschnitt (18) und einen weiteren Gehäuseabschnitt (19) aufweist, der das optische Element (17) zumindest teilweise umgibt, wobei ein einteiliges Gehäuse (12) vorgesehen ist, in welches das optische Element (17) eingesetzt ist und eine die Gehäuseöffnung (20) zumindest teilweise umgebende Anlagefläche (33) für das optische Element (17) vorgesehen ist, **dadurch gekennzeichnet, daß**
die Anlagefläche eine Beschichtung (41) mit einer gegenüber dem Gehäusematerial härteren Oberfläche aufweist.

2. Vorrichtung nach Anspruch 1, **dadurch gekennzeichnet, daß** das Gehäuse (12) aus einem gut wärmeleitfähigen Material, vorzugsweise einer Leichtmetallegierung, insbesondere Aluminiumlegierung, hergestellt ist.

3. Vorrichtung nach Anspruch 2, **dadurch gekennzeichnet, daß** die Wärmeleitfähigkeit des Gehäusematerials größer als 150 J/smk ist.

4. Vorrichtung nach Anspruch 1 oder 2, **dadurch gekennzeichnet, daß** die Beschichtung (41) der Anlagefläche (33) aus Übergangmetallen, insbesondere Nickel, Molybdän, Chrom oder dergleichen, vorgesehen ist.

5. Vorrichtung nach einem der vorhergehenden Ansprüche, **dadurch gekennzeichnet, daß** die Beschichtung (41) eine Schichtstärke von wenigstens 20 um aufweist.

6. Vorrichtung nach einem der vorhergehenden Ansprüche, **dadurch gekennzeichnet, daß** die Beschichtung (41) durch Drehen oder Fräsen mit Diamant, Polykristallindiamant (PKD), Keramiken als auch Schleifen, Präzisionsdrehen oder Läppen bearbeitet ist.

7. Vorrichtung nach einem der vorhergehenden Ansprüche, **dadurch gekennzeichnet, daß** die Beschichtung (41) eine Ebenheit von weniger als 1 µm, vorzugsweise eine Ebenheit im Bereich von 0,5 um, aufweist.

8. Vorrichtung nach einem der vorhergehenden Ansprüche, **dadurch gekennzeichnet, daß** die Anlagefläche (33) zumindest teilweise, vorzugsweise als vollständig beschichtete Ringfläche (39), ausgebildet ist.

9. Vorrichtung nach einem der vorhergehenden Ansprüche, **dadurch gekennzeichnet, daß** das Gehäuse (12) wenigstens einen Kühlkanal (51) aufweist, der im Gehäuse (12) auf der Höhe des optischen Elementes (17) vorgesehen ist und dieses wenigstens teilweise umgibt.

10. Vorrichtung nach Anspruch 9, **dadurch gekennzeichnet, daß** der Kühlkanal (51) symmetrisch zum optischen Element (17) angeordnet ist und das optische Element (17) vollständig umgibt.

11. Vorrichtung nach Anspruch 9 oder 10, **dadurch gekennzeichnet, daß** der Kühlkanal (51) mit einem Zuführkanal (56) und einem Abführkanal (57) versorgt ist, die vorzugsweise rechtwinklig zum Kühlkanal (51) angeordnet sind und vorzugsweise um 180° versetzt zueinander in den Kühlkanal (51) münden.

12. Vorrichtung nach einem der vorhergehenden Ansprüche, **dadurch gekennzeichnet, daß** das optische Element (17) wenigstens teilweise von einer Aufnahme (23) umgeben ist und vorzugsweise in dem weiteren Gehäuseabschnitt (19) einsetzbar ist.

13. Vorrichtung nach Anspruch 1, **dadurch gekennzeichnet, daß** das optische Element (17) als Umlenkspiegel, Teiltransmissionsspiegel, Auskoppelelement oder Totalreflexionsspiegel, vorzugsweise aus Silizium, Zinkselenid (ZnSe), Galliumarsenid (GaAs), Diamant oder Kupfer, ausgebildet ist.

14. Vorrichtung nach Anspruch 1, **dadurch gekennzeichnet, daß** als Leistungslaser ein Gaslaser, vorzugsweise ein CO₂-Laser, vorgesehen ist.

## Claims

1. A device for beam guiding of a laser beam (14) with at least one optical element (17) and with a housing (12), which has a first housing section (18) that is fittable at least partially into a support body (13) of a power laser or beam guiding system or attachable thereto, and a further housing section (19) that at least partially encloses the optical element (17), wherein a one-piece housing (12) is provided, into which the optical element (17) is fittable, and in that a bearing surface (33) for the optical element (17) is provided, which bearing surface (33) at least partially encloses a housing opening (29), **characterized in that** the bearing surface (33) has a coating (41) with a surface that is harder than a material from which the housing (12) is made.

2. The device according to claim 1, **characterized in that** the housing (12) is made from a material with high thermal conductivity, preferably of a light metal alloy, particularly of an aluminium alloy.

3. The device according to claim 2, **characterized in that** the thermal conductivity of the housing material is more than 150 J/smK.

4. The device according to claim 1 or 2, **characterized in that** the coating (41) of the bearing surface (33) is provided using transition metals, particularly nickel, molybdenum, chromium or the like.

5. The device according to one of the preceding claims, **characterized in that** the coating (41) has a layer thickness of at least 20 µm.

6. The device according to one of the. preceding claims, **characterized in that** the coating (41) is processed by turning or milling with diamond, polycrystalline diamond (PCD), ceramics as well as grinding, precision turning or lapping.

7. The device according to one of the preceding claims, **characterized in that** the coating (41) has an evenness of less than 1 µm, preferably an evenness in the range of 0,5 µm.

8. The device according to one of the preceding claims, **characterized in that** the bearing surface (33) comprises at least a partially coated, preferably fully coated, annular surface.

9. The device according to one of the preceding claims, **characterized in that** the housing (12) has at least one cooling channel (51), which is provided in the housing level with the optical element and at least partially encloses the optical element (17).

10. The device according to claim 9, **characterized in that** the cooling channel (51) is arranged symmetrically with respect to the optical element (17) and fully encloses the optical element (17).

11. The device according to claim 9 or 10, **characterized in that** the cooling channel (51) is supplied by a feed channel (56) and a discharge channel (57), which are preferably arranged perpendicular to the cooling channel (51) and are preferably open into the cooling channel (51) with a mutual offset of 180°.

12. The device according to one of the preceding claims, **characterized in that** the optical elements (17) is enclosed at least partially by a holder (23) and is preferably fitted with further housing section (19).

13. The device according to claim 1, **characterized in that** the optical element (17) is provided as a deflecting mirror, partial-transmission mirror, output element or total-reflection mirror, which is preferably made of silicon, zinc selenide (ZnSe), gallium arsenide (GaAs), diamond or copper.

14. The device according to claim 1, **characterized in that** a gas laser, preferably a CO₂-Laser, is provided as power laser.

## Revendications

1. Dispositif de guidage d'un faisceau laser (14) comprenant au moins un élément optique (17) et comprenant un boîtier (12), lequel présente une première section de boîtier (18) pouvant être logée au moins en partie dans un corps porteur (13) d'un laser de puissance ou d'un système de guidage du faisceau ou montée sur celui-ci et une autre section de boîtier (19) qui entoure au moins partiellement l'élément optique (17), un boîtier monobloc (12) étant prévu dans lequel est logé l'élément optique (17) et il est prévu une surface d'appui (33) pour l'élément optique (17) qui entoure au moins partiellement l'ouverture du boîtier (20), **caractérisé en ce que** la surface d'appui présente un revêtement (41) avec une surface plus dure que le matériau du boîtier.

2. Dispositif selon la revendication 1, **caractérisé en ce que** le boîtier (12) est fabriqué dans un matériau bon conducteur thermique, de préférence un alliage de métal léger, plus particulièrement un alliage d'aluminium.

3. Dispositif selon la revendication 2, **caractérisé en ce que** la conductivité thermique du matériau du boîtier est supérieure à 150 J/smk.

4. Dispositif selon la revendication 1 ou 2, **caractérisé en ce que** le revêtement (41) de la surface d'appui (33) est prévu en métaux transitoires, plus particulièrement du nickel, du molybdène, du chrome ou similaire.

5. Dispositif selon l'une des revendications précédentes, **caractérisé en ce que** le revêtement (41) présente une épaisseur de couche d'au moins 20 µm.

6. Dispositif selon l'une des revendications précédentes, **caractérisé en ce que** le revêtement (41) est usiné par tournage ou fraisage au diamant, au diamant polycristallin (PKD), à la céramique et aussi par rectification, tournage de précision ou rodage.

7. Dispositif selon l'une des revendications précédentes, **caractérisé en ce que** le revêtement (41) présente une planéité inférieure à 1 µm, de préférence une planéité de l'ordre de 0,5 µm.

8. Dispositif selon l'une des revendications précédentes, **caractérisé en ce que** la surface d'appui (33) est réalisée sous la forme d'une surface annulaire (39) au moins partiellement revêtue, de préférence entièrement.

9. Dispositif selon l'une des revendications précédentes, **caractérisé en ce que** le boîtier (12) présente au moins un canal de refroidissement (51) qui est prévu dans le boîtier (12) à hauteur de l'élément optique (17) et qui entoure celui-ci au moins partiellement.

10. Dispositif selon la revendication 9, **caractérisé en ce que** le canal de refroidissement (51) est disposé de manière symétrique par rapport à l'élément optique (17) et entoure complètement l'élément optique (17).

11. Dispositif selon la revendication 9 ou 10, **caractérisé en ce que** le canal de refroidissement (51) est alimenté par un canal d'arrivée (56) et un canal d'évacuation (57) qui sont disposés de préférence perpendiculairement par rapport au canal de refroidissement (51) et débouchent dans le canal de refroidissement (51) de préférence décalés de 180° l'un par rapport à l'autre.

12. Dispositif selon l'une des revendications précédentes, **caractérisé en ce que** l'élément optique (17) est au moins partiellement entouré par un logement (23) et peut de préférence être logé dans l'autre section du boîtier (19).

13. Dispositif selon la revendication 1, **caractérisé en ce que** l'élément optique (17) est réalisé sous la forme d'un miroir de déviation, de miroir à transmission partielle, d'élément de découplage ou de miroir à réflexion totale, de préférence en silicium, séléniure de zinc (ZnSe), arséniure de gallium (GaAs), diamant ou cuivre.

14. Dispositif selon la revendication 1, **caractérisé en ce que** le laser de puissance prévu est un laser à gaz, de préférence un laser au CO₂.
